# EUROPEAN PATENT APPLICATION

(11) **EP 2 533 504 A1**
(43) Date of publication of application: **12.12.2012**
(21) Application number: 11755658.9
(22) Date of filing: 15.03.2011
(51) Int. Cl.: H04M 1/19

(54) **AUDIO APPARATUS CAPABLE OF NOISE REDUCTION AND MOBILE TELEPHONE CAPABLE OF NOISE REDUCTION**

(30) Priority: 18.03.2010 CN 201020134459 U
(71) Applicant: Huawei Device Co., Ltd., Longgang District Shenzhen Guangdong 518129 (CN)
(72) Inventor: YU, Chengdong, Shenzhen Guangdong 518129 (CN); SHAN, Haibo, Shenzhen Guangdong 518129 (CN)
(74) Representative: Schmitz, Alexander
(86) International application number: PCT/CN2011/071786
(87) International publication number: WO 2011/113341

(57) **Abstract**

The present invention provides an audio apparatus capable of noise suppression, including a first signal processing circuit which is set with two input ends and one output end, where one input end is configured to receive noise and the other input end is configured to receive a digital music signal; and a second signal processing circuit which is connected to the output end of the first signal processing circuit. The first signal processing circuit is configured to generate a noise inversion signal, and mix and superpose the noise inversion signal with the digital music signal to obtain a mixed signal. The second signal processing circuit is configured to perform digital/analog conversion and amplification on the mixed signal, and output the signal to an earphone. The present invention further provides a noise-suppressed mobile phone where the earphone does not need to carry a power supply and a signal processing module, thereby reducing the cost of the earphone and simplifying a design structure.

## Description

### FIELD OF THE INVENTION

The present invention relates to a noise-suppressed apparatus, and in particular, to an audio apparatus capable of noise suppression and a noise-suppressed mobile phone.

### BACKGROUND OF THE INVENTION

With increasingly powerful multimedia functions of a mobile phone, a concept of a music phone is widely promoted, a user has higher and higher requirements for music in the mobile phone. Most users experience music through earphones, and meanwhile, can be free from interference of an external noisy environment. Currently, some related noise-suppressed earphones are launched in the industry. An active noise-suppressed earphone in the current market includes two earpieces and the earpieces are connected through a support; each earpiece is set with a microphone which is configured to collect environmental noise; and a power supply system, an A/D, a DSP processing module, and a D/A conversion module are set in the earpiece or on the support. When the user experiences music, after the microphone collects the background noise environment, a signal processing module of the earphone processes the background noise and finally obtains a synchronization signal with a phase inverse to the phase of the surrounding environmental noise, where the synchronization signal is sent to the user's ear through the earpiece; the synchronization signal and the sound which is directly sent to the user's ear compensate for each other, and the user can only hear the sound of the music, and cannot hear external noise.

The existing noise-suppressed earphone requires a built-in power supply and signal processing module, and the cost is relatively high.

### SUMMARY OF THE INVENTION

Embodiments of the present invention provide an audio apparatus capable of noise suppression and a noise-suppressed mobile phone.

To achieve the foregoing objective, the following technical solutions are adopted:

An audio apparatus capable of noise suppression includes a first signal processing circuit, where the first signal processing circuit is set with two input ends and one output end: one input end is configured to receive noise and the other input end is configured to receive a digital music signal; and the output end of the first signal processing circuit is connected to a second signal processing circuit; where the first signal processing circuit is configured to generate a noise inversion signal, and mix and superpose the noise inversion signal with the digital music signal to obtain a mixed signal; the second signal processing circuit is configured to perform digital/analog conversion and amplification on the mixed signal, and output the signal to an earphone.

A noise-suppressed mobile phone includes a microphone hole which is configured to receive noise, and an audio chip which is configured to output a digital music signal, and further includes a first signal processing circuit which is electrically connected to the microphone hole and the audio chip, where an output end of the first signal processing circuit is connected to a second signal processing circuit, where
the first signal processing circuit is configured to generate a noise inversion signal, and mix and superpose the noise inversion signal with the digital music signal to obtain a mixed signal; the second signal processing circuit is configured to perform digital/analog conversion and amplification on the mixed signal, and output the signal to an earphone.

By the audio apparatus capable of noise suppression and the noise-suppressed mobile phone which are provided in embodiments of the present invention, the first signal processing circuit generates the noise inversion signal, and mixes and superposes the noise inversion signal with the digital music signal to obtain the mixed signal; the second signal processing circuit performs digital/analog conversion and amplification on the mixed signal, and outputs the signal to the earphone; the background noise entering the ear through the earphone and the noise inversion signal which is in the amplified signal compensate for each other, and an analog music signal, that is, "pure and clean" music, is heard. In this way, the earphone does not need to carry a power supply and a signal processing module, thereby reducing the cost of the earphone and simplifying a design structure.

### BRIEF DESCRIPTION OF THE DRAWINGS

To illustrate the technical solutions in the embodiments of the present invention or in the prior art more clearly, the accompanying drawings required for describing the embodiments or the prior art are introduced briefly in the following. Apparently, the accompanying drawings in the following description are only some embodiments of the present invention, and persons of ordinary skill in the art can further derive other drawings according to the accompanying drawings without creative efforts.

FIG. 1 is a schematic structural diagram of an audio apparatus capable of noise suppression according to an embodiment of the present invention;

FIG. 2 is a schematic structural diagram of a noise-suppressed mobile phone according to an embodiment of the present invention; and

FIG. 3 is a schematic structural diagram of an earphone used for coordination with a noise-suppressed mobile phone according to an embodiment of the present invention.

### DETAILED DESCRIPTION OF THE EMBODIMENTS

An audio apparatus capable of noise suppression and a noise-suppressed mobile phone provided in embodiments of the present invention are described in detail with reference to the accompanying drawings in the following.

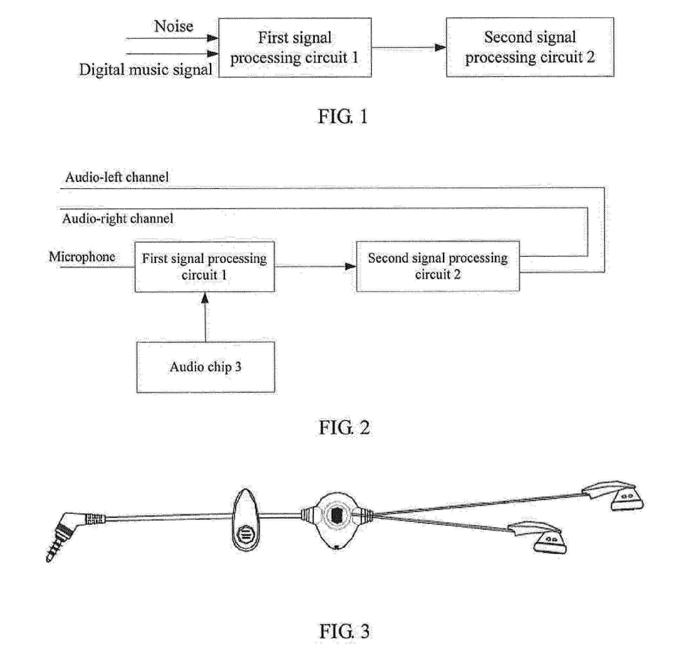

As shown in FIG. 1, an audio apparatus capable of noise suppression includes a first signal processing circuit 1, where the first signal processing circuit 1 is set with two input ends and one output end: one input end is configured to receive noise; and the other input end is configured to receive a digital music signal; the output end of the first signal processing circuit 1 is connected to a second signal processing circuit 2.

The input end of the first signal processing circuit 1 may be connected to a microphone; the microphone receives background noise, that is, receives the background noise and amplifies the background noise and inputs the amplified noise to the first signal processing circuit 1; the first signal processing circuit 1 converts an analog noise signal into a digital noise signal, and generates a noise inversion signal whose phase is inverse to the phase of the digital noise signal and whose amplitude matches the amplitude of the digital noise signal; when a user listens to music, the digital music signal is input to the first signal processing circuit 1; the first signal processing circuit 1 is further configured to mix and superpose the noise inversion signal with the digital music signal to obtain a mixed signal; the second signal processing circuit 2 performs digital/analog conversion and amplification on the mixed signal, and outputs the signal to an earphone, and the amplified signal enters the user's ear through the earphone; the background noise entering the user's ear and the noise inversion signal in the amplified signal compensate for each other, and an analog music signal, that is, "pure and clean" music, is heard.

The first signal processing circuit 1 includes an analog/digital conversion circuit, a noise negating circuit, and a mixing and superposing circuit, where the analog/digital conversion circuit is connected to the noise negating circuit.

Noise is an analog signal and is converted by the analog/digital conversion circuit into the digital noise signal.

The noise negating circuit is configured to generate the noise inversion signal whose phase is inverse to the phase of the digital noise signal and whose amplitude matches the amplitude of the digital noise signal.

The mixing and superposing circuit is electrically connected to the noise negating circuit and is configured to mix and superpose the received digital music signal with the noise inversion signal.

The second signal processing circuit 2 includes a digital/analog conversion circuit and a signal amplification circuit. The digital/analog conversion circuit converts a mixed digital signal of the noise inversion signal and the digital music signal into an analog mixed signal; the signal amplification circuit is configured to amplify the analog mixed signal, and output the amplified analog mixed signal to the earphone, where the earphone definitely only needs to be an earphone with earpieces.

By the audio apparatus capable of noise suppression provided in the embodiment of the present invention, the first signal processing circuit generates the noise inversion signal, and mixes and superposes the noise inversion signal with the digital music signal to obtain the mixed signal; the second signal processing circuit is configured to perform digital/analog conversion and amplification on the mixed signal, and outputs the signal to the earphone; the background noise entering the user's ear through the earphone and the noise inversion signal in the amplified signal compensate for each other, and the analog music signal, that is, "pure and clean" music, is heard. In this way, the earphone does not need to carry a power supply and a signal processing module, thereby reducing the cost of the earphone and simplifying a design structure. That is, the earphone only needs to receive the amplified signal, and the earphone does not need to carry the power supply and the signal processing module.

In this embodiment of the present invention, the audio apparatus including the first signal processing circuit and the second signal processing circuit may be set in a mobile phone, and a built-in power supply of the mobile phone can be used to supply power to these circuits. In this way, when the user needs to listen to music, the user only needs to insert an earphone including earpieces into the earphone hole of the mobile phone for listening to music, and then the user can listen to "pure and clean" music. Therefore, the earphone does not need to carry an additional power supply, which may reduce costs and also simplify the design of the earphone in the prior art.

Definitely, the audio apparatus capable of noise suppression in this embodiment of the present invention may be set or built in another terminal that can play music, for example, a desktop computer, a notebook computer, and a PDA. This embodiment of the present invention takes the mobile phone as an example for illustration.

Improvement is made to the existing mobile phone: The audio apparatus capable of noise suppression in this embodiment of the present invention is assembled into the existing mobile phone to achieve a purpose of receiving signals clearly.

The structure of the mobile phone after assembling is as follows:

As shown in FIG. 2, a noise-suppressed mobile phone in an embodiment of the present invention is set with a microphone hole which is configured to receive external environmental noise, and an audio chip 3 which is configured to output a digital music signal, where the microphone hole and the audio chip 3 are electrically connected to an input end of a first signal processing circuit 1, respectively, and an output end of the first signal processing circuit 1 is connected to a second signal processing circuit 2. The first signal processing circuit 1 converts an analog noise signal into a digital noise signal, and generates a noise inversion signal whose phase is inverse to the phase of the noise and whose amplitude matches the amplitude of the noise; when a user listens to music, the audio chip 3 inputs the digital music signal to the first signal processing circuit 1; the first signal processing circuit 1 mixes and superposes the noise inversion signal with the digital music signal to obtain a mixed signal; the second signal processing circuit 2 performs digital/analog conversion and amplification on the mixed signal. The mobile phone is also set with an earphone hole that can be connected to an earphone; when the earphone is inserted into the mobile phone, the signal amplified by the second signal processing circuit 2 enters the user's ear; the background noise entering the user's ear and the noise inversion signal in the amplified signal compensate for each other, and an analog music signal, that is, "pure and clean" music, is heard.

The first signal processing circuit 1 includes an analog/digital conversion circuit, a noise negating circuit, and a mixing and superposing circuit. The analog/digital conversion circuit is connected to the noise negating circuit; the analog/digital conversion circuit is configured to convert the analog noise signal into the digital noise signal; the analog/digital conversion circuit is connected to the noise negating circuit and is configured to generate the noise inversion signal whose phase is inverse to the phase of the noise and whose amplitude matches the amplitude of the noise. The mixing and superposing circuit is electrically connected to the noise negating circuit and is configured to mix and superpose the received digital music signal with the noise inversion signal.

The second signal processing circuit 2 includes: a digital/analog conversion circuit, configured to convert a mixed digital signal of the noise inversion signal and the digital music signal into an analog mixed signal; and a signal amplification circuit, configured to amplify the analog mixed signal.

In this embodiment of the present invention, because the first signal processing circuit and the second signal processing circuit are set in the mobile phone, the built-in power supply of the mobile phone can be used to supply power to these circuits. In this way, when the user needs to listen to music, the user only needs to insert an earphone including earpieces into the earphone hole of the mobile phone for listening to music, and then the user can listen to "pure and clean" music. Therefore, the earphone does not need to carry an additional power supply, which may reduce costs and also simplify the design of the earphone in the prior art.

The noise-suppressed mobile phone in this embodiment of the present invention may also use an earphone 4 which includes a microphone and is shown in FIG. 3. The earphone 4 is connected to a microphone 5 through a conductive wire, where the microphone 5 is connected to a plug 7 through a conductive wire, and a positioning clamp 6 is set on the conductive wire between the microphone 5 and the plug 7; the positioning clamp 6 may be clamped at the collar position; the plug 7 is used for coordination with the microphone hole. The microphone 5 can receive external environmental noise and provide the external environmental noise for the first signal processing circuit in the mobile phone.

The audio apparatus capable of noise suppression in this embodiment of the present invention can be applied in any audio playing apparatus that uses a headphone or an earphone, for example, a desktop computer and a notebook computer.

The foregoing specific embodiments are not intended to limit the present invention. For persons of ordinary skill in the art, any modification, equivalent replacement, and improvement made without departing from the principle of the present invention shall fall within the protection scope of the present invention.

## Claims

1. An audio apparatus capable of noise suppression, comprising a first signal processing circuit, wherein the first signal processing circuit is set with two input ends and one output end: one input end is configured to receive noise and the other input end is configured to receive a digital music signal; and the output end of the first signal processing circuit is connected to a second signal processing circuit, wherein the first signal processing circuit is configured to generate a noise inversion signal, and mix and superpose the noise inversion signal with the digital music signal to obtain a mixed signal; and the second signal processing circuit is configured to perform digital/analog conversion and amplification on the mixed signal, and output the signal to an earphone.

2. The audio apparatus capable of noise suppression according to claim 1, wherein the first signal processing circuit comprises an analog/digital conversion circuit, a noise negating circuit, and a mixing and superposing circuit, wherein:
the analog/digital conversion circuit is configured to convert an analog noise signal into a digital noise signal;
the noise negating circuit is connected to the analog/digital conversion circuit and is configured to generate the noise inversion signal whose phase is inverse to the phase of the digital noise signal and whose amplitude matches the amplitude of the digital noise signal; and
the mixing and superposing circuit is electrically connected to the noise negating circuit and is configured to mix and superpose the received digital music signal with the noise inversion signal.

3. The audio apparatus capable of noise suppression according to claim 1, wherein the second signal processing circuit comprises a digital/analog conversion circuit and a signal amplification circuit, wherein:
the digital/analog conversion circuit is configured to convert a mixed digital signal of the noise inversion signal and the digital music signal into an analog mixed signal; and
the signal amplification circuit is configured to amplify the analog mixed signal, and output the signal to the earphone.

4. A noise-suppressed mobile phone, comprising a microphone hole which is configured to receive noise, and an audio chip which is configured to output a digital music signal, wherein the mobile phone further comprises a first signal processing circuit which is electrically connected to the microphone hole and the audio chip, and an output end of the first signal processing circuit is connected to a second signal processing circuit; wherein
the first signal processing circuit is configured to generate a noise inversion signal, and mix and superpose the noise inversion signal with the digital music signal to obtain a mixed signal; the second signal processing circuit is configured to perform digital/analog conversion and amplification on the mixed signal, and output the signal to an earphone.

5. The noise-suppressed mobile phone according to claim 4, wherein the earphone is connected to a microphone through a conductive wire, wherein the microphone is connected to a plug through a conductive wire and the microphone is connected to the mobile phone through the plug, wherein the microphone is configured to provide noise for the mobile phone.

6. The noise-suppressed mobile phone according to claim 4, wherein the first signal processing circuit comprises an analog/digital conversion circuit, a noise negating circuit, and a mixing and superposing circuit, wherein
the analog/digital conversion circuit is configured to convert an analog noise signal into a digital noise signal;
the noise negating circuit is connected to the analog/digital conversion circuit and is configured to generate the noise inversion signal whose phase is inverse to the phase of the digital noise signal and whose amplitude matches the amplitude of the digital noise signal; and
the mixing and superposing circuit is electrically connected to the noise negating circuit and is configured to mix and superpose the received digital music signal with the noise inversion signal.

7. The noise-suppressed mobile phone according to claim 4, wherein the second signal processing circuit comprises a digital/analog conversion circuit and a signal amplification circuit, wherein
the digital/analog conversion circuit is configured to convert a mixed digital signal of the noise inversion signal and the digital music signal into an analog mixed signal; and
the signal amplification circuit is configured to amplify the analog mixed signal, and output the signal to the earphone.
